# EUROPEAN PATENT APPLICATION

(11) **EP 1 187 062 A2**
(43) Date of publication of application: **13.03.2002**
(21) Application number: 01830258.8
(22) Date of filing: 13.04.2001
(51) Int. Cl.: G06K 17/00

(54) **System and method for managing and controlling data related to special goods**

(30) Priority: 04.07.2000 IT RM000363
(71) Applicant: ANPA -Agenzia Nazionale per la Protezione dell'Ambiente, 00144 Roma (IT)
(72) Inventor: Bagatti, Massimo, 00128 Roma (IT)
(74) Representative: Leone, Mario

(57) **Abstract**

System and method for managing and controlling data related to special goods, comprising a control unit apt to receive and store the data outputted by a plurality of communication devices provided to system users, wherein said control unit comprises a checking and validation unit of the received data apt to operate in real time.

## Description

The present invention relates to a system and method for managing and controlling data related to special goods.

The control of activities related to the management of materials like wastes or other special goods is carried out with the aid of instruments of administrative type, i.e., substantially on paper, regulated by corresponding legislative measures.

In these activities, certainly the most felt problem is that related to the transport of special goods from the production sites to the intermediate stocking or final treatment and disposal plants and to the corresponding recording of the loading and/or unloading steps.

In fact, the managing and the controlling of the handling of goods foresees the filling in of forms and registries by producers, transporters and subjects in charge of the collection thereof.

All the stages from the loading of goods to the storing thereof at intermediate or final plants are then manually recorded on paper, and these information are subsequently transmitted to the bodies in charge according to different modes and timetables, to be then processed and audited.

For 'special good' any good subject to special processes and standards, like, e.g. guns, coffins, mortal remains, works of art, animals, various hazardous goods, radioactive substances, valuables, wastes, etc., is to be understood.

For the sake of simplicity, hereinafter reference will still be made to wastes, although of course it is understood that the same system and the same method may also be carried out for other categories of special goods.

By way of example, a typical waste transport activity will hereinafter be reported.

The transporter fills in and signs a form in four copies for each typology of waste he undertakes the transport of. The producer retains the first one of the four copies, whereas the remaining three will have to be signed by the administrator of the treatment and/or disposal plant who will retain a second copy. A third copy will be kept by the transporter, whereas the fourth one will have to be sent to the producer within one month.

Moreover, the producer and the administrator of the treatment and/or disposal plant should fill in dedicated books with the information related to all the loading and/or unloading operations.

Moreover, these processes are rendered further complex and elaborated by the fact that the wastes are classified according to the typology thereof and to the treatment they will be subjected to. In fact, for each type of waste, identified by a European code, a specific type of transport, to be carried out by authorised subjects, and obviously different treatment modes, is provided. This entails a multiplication of books and forms in order to always keep under control the waste treatment operations for each category.

All this entails an evident difficulty in collecting and managing data related to this type of activity, related in particular to the scattering of the data, to all the possible mistakes due to erroneous form filling, and to the possibility of eluding the auditing performed by the authorities.

For waste producers and managers, the yearly filing of a declaration with the Unified Declaration Form (MUD), specifying the typologies and the produced and managed amounts, is provided. MUD data, though not exhaustive, become technically available approximately one year after the date of filling.

The present invention overcomes the above mentioned drawbacks of the known art, as it provides a system for managing and controlling data related to special goods, comprising a control unit apt to receive data incoming from a plurality of communication devices, each of said devices comprising:
- a computer apt to manage the operation of the entire device;
- a card managing unit connected to said computer; and
- a data transmission/reception unit connected to said computer,
said system being characterised in that said control unit comprises a checking and validation unit of the received data apt to operate in real time.

The present invention further provides a method for managing and controlling data related to special goods, comprising the following steps:
- providing a communication device to an user, said device being apt to exchange information with a control unit;
- providing an electronic card to an user, said card being apt to store information indicative of said user;
- recording a loading operation of said goods at a producer user; and
- recording an unloading operation of said goods at an intermediate and/or end treatment plant.

One of the main advantages of the system and of the method according to the present invention is that of allowing the near-total elimination of paper documents.

Moreover, the system considerably reduces the possibility of human errors, as it minimises operator's intervention in indicating the operations carried out.

Moreover, the system is capable of checking in real time the activities carried out, validating the correctness thereof.

It further allows to record all of the traffic of special goods on the territory, thus simply and immediately attaining a complete outline of the hereto described activities. This proves particularly useful and provides a series of opportunities linked to the cognition aspects of the waste management system, going from the prevention to the control, to the aiding of the companies for the qualification of the industrial processes, from the planning to the management optimization, besides a non-negligible economical advantage, both for the companies and for the public administration.

Further advantages, features and operation modes of the present invention will be made apparent in the following detailed description of a preferred embodiment thereof, given by way of example and not for limitative purposes, making reference to the figures of the attached drawings, wherein:
figure 1 is a block diagram of the system according to the present invention;
figure 2 is a block diagram of the control unit of figure 1;
figure 3 is a block diagram of the data managing unit of figure 2; and
figure 4 is a block diagram of a communication device according to the present invention.

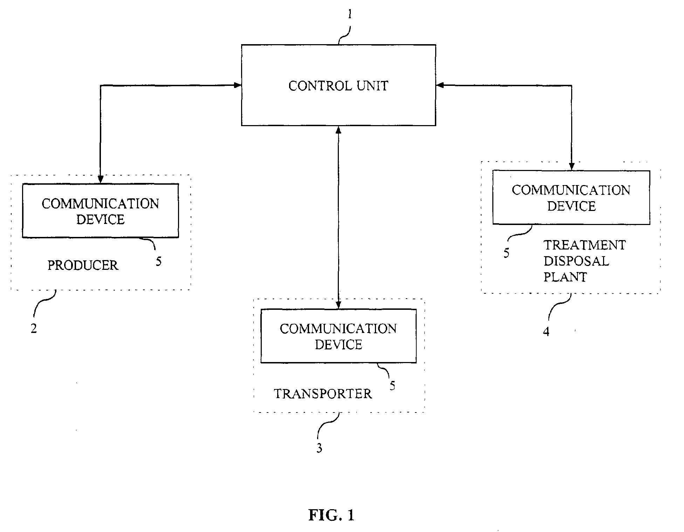

With initial reference to figure 1, a block diagram representing the system according to the present invention is shown.

The system comprises a control unit 1 connected, according to modes that will be detailed hereinafter, to a plurality of users and in particular to one or more producer-type users 2, one or more transporter-type users 3, and one or more intermediate and/or end treatment and disposal plants 4.

To the ends of the present invention, a producer-type user 2 is considered to be any subject apt to produce wastes of any kind, wastes to be transferred at corresponding plants 4. Therefore, the transporter-type users 3 represent the subjects which physically carry out said waste transfer.

For the sake of simplicity, hereinafter the term 'producer' will indicate a producer-type user and the term 'transporter' will indicate a transporter-type user.

Each of the producers 2, of the transporters 3 and of the plants 4, is provided with a communication device 5, connected to the control unit 1.

By means of said communication devices 5, each user may transmit and/or receive data from the control unit 1 during the various steps, going from the loading of the waste by a transporter 2 at a producer 2, to the unloading thereof at one or more plants 4.

Each of the system users is further provided with an electronic card apt to be read by said communication devices 5, and to store an elevated amount of information. Such card is used as identification means as well as a data storage support, the former being provided with a memory of re-writeable type.

In particular, a first card is provided to each producer which contains identification data of the latter, a PIN personal identification code and a territorial code identifying the geographical area wherein the latter is located.

A second card is provided to each transporter, and it stores, besides the identification data of the transportation company, identification data of the vehicle used, of the authorised typologies of waste, a date of expiry, the essential data related to memberships to specific professional registers, and it allows to store data related to the specific transporting operation to be carried out.

Finally, a third card is provided to each managing plant, storing identification data, possibly the geographic location, and the authorisation data of the latter.

Obviously, each of such cards may exclusively be updated, enabled or disabled by the system manager on the basis of controls and/or audits carried out as needed.

The control unit 1 is apt to receive the data incoming from each of the communication devices 5 and corresponding to each goods loading and/or unloading operation carried out.

In particular, the process provides that a transporter 3, in order to be able to carry out the loading of a certain amount of wastes at a producer 2, should transmit to the control unit 1, with a personal communication device of portable type, all the information related to the loading operation to be carried out, i.e.: identification data of the producer 2 possibly read by his/her electronic card, data related to the typology and to the amount of wastes to be transported, and data related to the destination plant 4.

The wastes, sorted according to the typology thereof, are advantageously classified and identified with alphanumeric codes, so as to simply define the essential features thereof, like, e.g. the provenance, the container typology, the transport modes, etc..

All information is stored on the electronic card of the transporter 3, which will previously have been inserted into the communication device 5. Concomitantly, the data are transmitted to the control unit 1, according to a cellular-type transmission standard, e.g., GSM or UMTS. This allows to check the actual localisation of the transporter 5 at loading, comparing the cell code corresponding to the transmission area with the territorial code stored onto the card of the producer 2. Such checking is aimed at ensuring the absence of irregularities, and at preventing loading operations to be carried out at unscheduled locations.

Moreover, in order to be able to constantly check the course carried out from the loading to the delivering of the wastes, also satellite localisation systems, e.g. of the GPS type, may be used.

The control unit 1 stores the data, upon reception thereof, and carries out in real time a check thereon, validating the consistency thereof, authorising the waste loading and transport operation or not. This authorisation is transmitted as answer to the transporter 3. Then, the communication device of the transporter will provide the printing out of a receipt, possibly in carbon copy, to be used by the transporter 3 as consignment paper, as well as by the producer 2 as a receipt attesting that the delivery of the waste has been carried out.

Subsequently, upon reaching the treatment and/or disposal plant 4 by the transporter 3, the process provides that the transporter's electronic card be inserted into the communication device outfitted to the plant 4 in order to automatically download the data previously stored therein. This operation is simultaneously transmitted to the control unit 1 which provides the storing thereof and carries out a further consistency check with the data already received at the loading.

In this case as well, the data transmission system may advantageously exploit the cell system in order to also check that the unloading actually takes place at the indicated site.

All the data related to the loading, to the transport and to the unloading are then stored by the control unit 1, processed and made available to authorities, bodies, associations or other subjects wishing to use them for controlling aims or to control them to knowledge and/or statistical ends.

Of course, there may occur a case in which a first transporter should not deliver the load at a stationary plant, instead transferring it to a second transporter which will carry it to destination. In this case, also the intermediate loading and unloading operations will have to be recorded and transmitted to the control unit, casewise assigning a different role to each transporter. In fact, the first transporter should consider the second transporter as a treatment and/or disposal plant, whereas the second transporter should consider the first as a producer.

Actually, this is a rather frequent case when the transport of the goods is of mixed type, i.e., carried out partly on rubber and partly on trains, ships or aeroplanes.

In these cases, the system according to the present invention advantageously allows to always keep track of all the intermediate passages, thus being capable of providing in any case a complete information on the course followed by the waste, from the starting to the end.

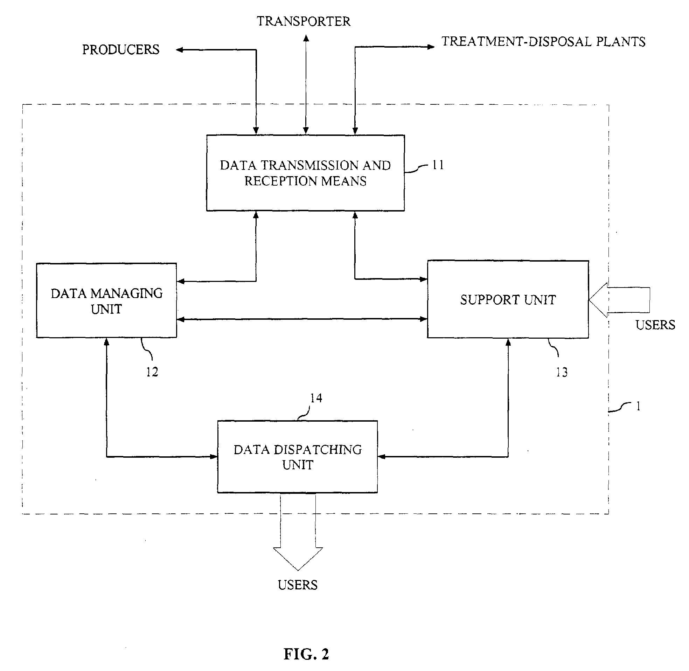

Figure 2 is a block diagram of the control unit 1 of Figure 1.

The control unit 1 comprises data transmission and reception means 11, apt to exchange information with the communication devices outfitted to each of the producers, of the transporters and of the managing plants.

A data managing unit 12 is connected to said data transmission and reception means 11. The managing unit 12, as it will be detailed hereinafter, is apt to perform several operations onto the received data, among which precisely the storing, checking and validation ones.

Instead, a support unit 13 is apt to receive requests from external users which may need, for any reason whatsoever to know the data stored and related to the traffic of waste on the territory. Such support unit 13 advantageously comprises a call centre, a section dedicated to the managing of a possible Internet site of the system managing body, and whatever else may be useful for the desirable aims.

A data dispatching unit 14 is connected to the support unit 13, as well as to the data managing unit 12.

Such dispatching unit 14 is apt to satisfy the requests received from the support unit 13, acquiring from the managing unit 12 the required data and information, in order to provide them to requesting parties, or even for preparing printouts and 'statements of account for waste' to be periodically sent to producers, transporters and managing plants in order to allow them to carry out controls and audits on the individual activities.

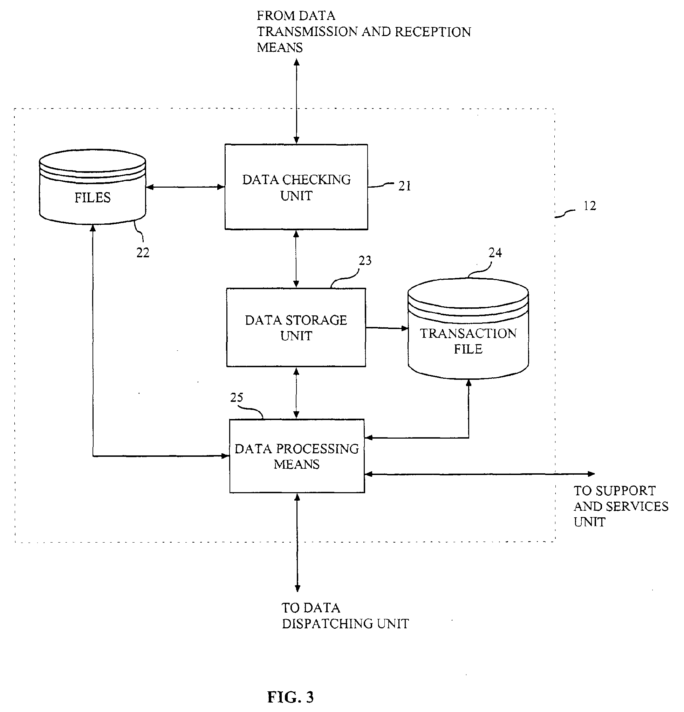

The subsequent figure 3 is a block diagram of the data managing unit 12 of figure 2.

The data incoming from the data transmission and reception means, are first of all inputted to a data checking unit 21.

This data checking unit 21 is further apt to acquire data from archives storing information about the subjects involved in the transactions and in the waste transport operations. Thus, the unit 21 may carry out a crosscheck, being hence capable of validating in real time the data received during the operations of loading/unloading the goods.

A data storage unit 23, in turn connected to the checking unit 21, stores on a file 24 each transaction carried out, i.e., each loading, transport and unloading operation of a certain goods.

The whole set of information from the files 22, from the data checking unit 23 and from the transaction file 24, is provided to data processing means 25 which are apt to carry out any type of processing, searching or statistical analysis on such information. Then, the data thus processed are outputted to the data dispatching unit 14.

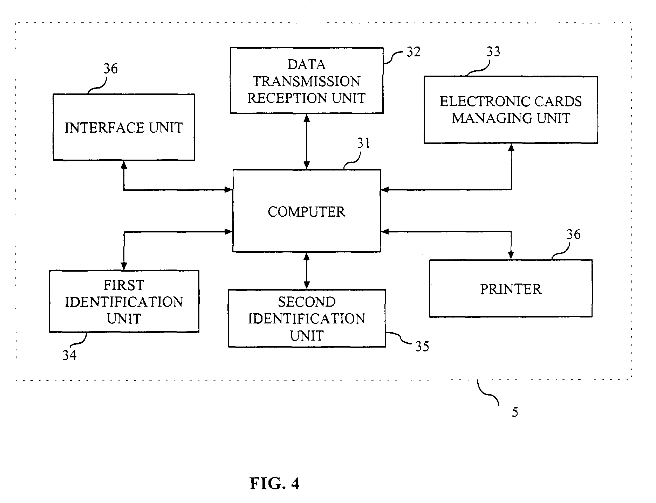

Fig. 4 is a block diagram of a communication device 5 according to the present invention.

The communication device 5 comprises a computer 31, apt to manage the entire operation of the device.

To the computer 31 several units are connected, in particular a data transmission/reception unit 32, apt to communicate with the above described control unit 1. moreover, an electronic card managing unit 33 is connected to the computer 31. This unit 33 is used by the system operators to read and/or store information onto their electronic cards.

A first identification unit 34, implemented by means of an electronic encoding device, is apt to provide, upon request, an identification code of the device containing it, whereas a second identification unit 35 comprises an electronic encoding circuit, e.g., an electronic key to be inserted into a connector of the device, is advantageously used as a further instrument for the personal identification of the operator using the communication device 5.

Advantageously, the device 5 also comprises a printer 36, to be externally connected or internal thereto, to be used for printing the receipts related to the operations carried out or other documentation which may prove particularly useful.

Finally, an interface unit 36, e.g. of the infrared type, is connected to the computer 31 for connecting the latter to other processing systems, in order to transfer the data stored therein to carry out further processings not provided by the management software residing in the communication device 5.

The hereto described system and method may find an advantageous application in all the cases in which the essential data of the transaction and of the handling of special goods need to be singled out with certainty and in real time, e.g. in airports, where the carriers in charge of the collecting, dispatching and delivering often take turns, in compliance to required times and operation spaces differing in norm, contract, International law, safety.

The carrying out of the method according to the present invention, by means of the abovedisclosed apparatuses, allows to control in real time the management of the handling among different operators, and hence the possible responsibility of the holder subjects.

The present invention was hereto described according to a preferred embodiment thereof, given by way of example and not for limitative purposes. It is understood that other embodiments of the invention may be envisaged, all however falling within the protective scope thereof, as defined by the annexed claims.

## Claims

1. A system for managing and controlling data related to special goods, comprising a control unit (1) apt to receive data outputted from a plurality of communication devices (5), each of said devices comprising:
- a computer (31) apt to manage the operation of the entire device (5);
- a card managing unit (33) connected to said computer (31); and
- a data transmission/reception unit (32) connected to said computer (31),
said system being **characterised in that** said control unit (1) comprises a checking and validation unit (21) of the received data apt to operate in real time.

2. The system according to claim 1, wherein each of said communication devices (5) is of the portable type.

3. The system according to claim 1 or 2, wherein said data transmission/reception unit (32) is of the cellular type.

4. The system according to claim 3, wherein said cellular type data transmission/reception unit (32) operates according to the GSM standard.

5. The system according to claim 3, wherein said cellular type data transmission/reception unit (32) operates according to the UMTS standard.

6. The system according to any one of the preceding claims, wherein each of said communication devices (5) comprises an interface unit (36) apt to communicate with one data processing system.

7. The system according to claim 6, wherein said one interface unit (36) is of the infrared type.

8. The system according to any one of the preceding claims, wherein said cards are of electronic type and comprise a re-writeable memory apt to store information indicative of the card holder.

9. The system according to any one of the preceding claims, wherein each communication device (5) comprises a first identification unit (34) implemented by means of an electronic encoding device apt to provide an identification code of the device containing it.

10. The system according to any one of the preceding claims, further comprising a second identification unit (35) implemented by means of a electronic encoding circuit, apt to be connected to said communication device (5) and to univocally identify an operator of said communication device (5).

11. The system according to any one of the preceding claims, wherein said control unit (1) further comprises:
- data transmission and reception means (11), apt to exchange information with said communication devices (5) ;
- means (23) for the storage of the received data;
- processing means (25) of said stored data;
- a support unit (13) apt to manage requests incoming from system users; and
- a data dispatching unit (14), apt to provide said processed data to an user requesting the latter.

12. The system according to claim 11, wherein said data storage means (23) comprises a storage unit and one or more archives (24), said storage unit being apt to manage operations of reading and writing on said files (24).

13. A method for managing and controlling data related to special goods, comprising the following steps:
- providing a communication device (5) to an user, said device being apt to exchange information with a control unit (1);
- providing an electronic card to an user, said card being apt to store information indicative of said user;
- recording a loading operation of said goods at a producer user (2); and
- recording an unloading operation of said goods at an intermediate and/or end treatment plant(4).

14. The method according to claim 13, wherein said step of recording a loading operation of said goods comprises the steps of:
- acquiring identification data of a transporter user (3);
- acquiring identification data of said producer user (2);
- acquiring identification data of said goods;
- acquiring identification data of said treatment plant (4) of said goods;
- checking said acquired data;
- printing a receipt bearing the essential data of the loading operation.

15. The method according to claim 14, wherein said step of acquiring identification data of a transporter user comprises the step of inserting a first electronic card into a communication device (5), said communication device being apt to read the information stored on said first electronic card.

16. The method according to claim 15, wherein said step of acquiring identification data of a transporter user (3) comprises the step of connecting an electronic circuit (35) to said communication device (5), said electronic circuit (35) being apt to provide an identification code of said transporter user (3).

17. The method according to any one of the claims 14 to 16, wherein said step of acquiring identification data of a producer user comprises the step of inserting a second electronic card into a communication device (5), said communication device (5) being apt to read the information stored in said second electronic card.

18. The method according to any one of the claims 14 to 17, wherein said step of checking said acquired data comprises the steps of:
- transmitting said acquired data to a control unit (1);
- comparing said data with information stored in one or more files (22);
- storing said acquired data; and
- notifying the outcome of said comparing step.

19. The method according to claim 18, wherein said step of transmitting data is carried out by means of said communication device (5), which comprises a data transmission/reception unit (32) of cellular type.

20. The method according to claim 13, wherein said step of recording the unloading operation of said goods comprises the steps of:
- transmitting to a control unit (1) information related to the goods to be unloaded; and
- storing said information.
